# EUROPEAN PATENT APPLICATION

(11) **EP 4 015 076 A1**
(43) Date of publication of application: **22.06.2022**
(21) Application number: 21193663.8
(22) Date of filing: 27.08.2021
(51) Int. Cl.: B01J 19/00, C01B 3/24

(54) **METHODS OF PRODUCING ONE OR MORE PRODUCTS USING A FEEDSTOCK GAS REACTOR**

(30) Priority: 15.12.2020 US 202063125794 P
(71) Applicant: Ekona Power Inc., Burnaby, British Columbia, V5A 2H5 (CA)
(72) Inventor: Reid, Christopher Edwin John, Vancouver, V6B 1H4 (CA); Schubak, Gary Edward, Vancouver, V6B 1H4 (CA); Kratschmar, Kenneth William, Vancouver, V6B 1H4 (CA); Leboe, David Aaron, Vancouver, V6B 1H4 (CA); Esquivel, Shawn Dayupay, Vancouver, V6B 1H4 (CA); Li, Guowei, Vancouver, V6B 1H4 (CA)
(74) Representative: Roberts, Gwilym Vaughan

(57) **Abstract**

There is described a method of using a feedstock gas reactor. Reaction of feedstock and combustion gases in the reactor produces hydrogen through pyrolysis of the feedstock gas. At least some of a mixed product stream extracted from the reactor is recycled to the reactor to drive further pyrolysis of the feedstock gas. A portion of the recycled mixed product stream may be recirculated back to a combustion chamber of the reactor, and a portion of the recycled mixed product stream may be recirculated back to a reaction chamber of the reactor.

## Description

### Field

The present disclosure relates to methods of producing one or more products using a feedstock gas reactor.

### Background

Many industries rely on the use of industrial hydrogen gas (H₂), including petroleum production, ammonia production, methanol production, and others. Approximately 96% of industrial hydrogen is derived from fossil fuels with the majority being produced by steam methane reforming (SMR) of natural gas. Such incumbent processes are also responsible for significant greenhouse gas emissions. SMRs, for example, can produce between 10-17 tonnes of carbon dioxide (CO₂) per tonne of hydrogen produced. Adding CO₂ cleanup and sequestration to SMR flue gas streams is generally cost-prohibitive unless penalties for carbon dioxide emissions increase substantially.

SMR generates a hydrogen-rich synthesized gas (or "syngas") which is purified to produce hydrogen. However, SMR has the drawback that it also creates a CO₂-intensive flue gas stream which is typically exhausted to the atmosphere. The flue gas has a typical carbon intensity in the range of 10 to 17 kg CO₂e/kgH₂. Although CO₂ emissions can be separated from the flue gas and sequestered to reduce the environmental impact of the process, this added process step incurs a significant cost which can impact the overall economic viability of the process.

Alternative means of sustainable hydrogen production include the production of hydrogen from renewable electricity using an electrolyzer, or decomposing natural gas into pure hydrogen and solid sequesterable carbon using thermal pyrolysis where the heat of reaction is supplied by a source of renewable electricity. While such systems can yield a sustainable low-carbon emission source of hydrogen, the technologies are not cost-competitive with incumbent methods and are not widely adopted.

### Summary

According to a first aspect of the disclosure, there is provided a method of using a feedstock gas reactor comprising a reaction chamber fluidly connected to a combustion chamber via one or more fluid flow paths, the method comprising: introducing a feedstock gas comprising a hydrocarbon into the reaction chamber; introducing a combustible gas into the combustion chamber; and combusting the combustible gas in the combustion chamber so as to form one or more combustion product gases and so as to cause at least a portion of the one or more combustion product gases to flow into the reaction chamber via the one or more fluid flow paths and mix with the feedstock gas, wherein, as a result of the mixing of the at a least a portion of the one or more combustion product gases with the feedstock gas, energy is transferred from the at least a portion of the one or more combustion product gases to the feedstock gas and thereby causes a chemical reaction to decompose the feedstock gas into one or more reaction product gases comprising hydrogen; extracting a mixed product stream from the feedstock gas reactor, wherein the mixed product stream comprises hydrogen, carbon, and water; and recycling at least a portion of the mixed product stream to the feedstock gas reactor.

The mixed product stream may consist of hydrogen, carbon, and water.

The method may further comprise separating at least some of the carbon from the mixed product stream.

Separating the at least some of the carbon may comprise using one or more of: a cyclone; a sintered metal filter; and a bag filter.

The method may further comprise separating at least some of the hydrogen from the mixed product stream.

Separating the at least some of the hydrogen may comprise using one or more of: a membrane separator; a polymeric membrane separator; a palladium membrane separator; chemical adsorption; pressure swing adsorption; and temperature swing adsorption.

Separating the at least some of the hydrogen may comprise using pressure swing adsorption.

Recycling the at least a portion of the mixed product stream to the feedstock gas reactor may comprise: separating at least some of the carbon and at least some of the hydrogen from the mixed product stream to form a tail gas stream; and recycling the tail gas stream to the feedstock gas reactor.

Recycling the tail gas stream to the feedstock gas reactor may comprise: mixing a first fraction of the tail gas stream with an oxidant; and mixing a second fraction of the tail gas stream with a source of the feedstock gas.

The first fraction plus the second fraction may equal 1.

Recycling the tail gas stream may comprise splitting the tail gas stream into the first and second fractions, and wherein the splitting comprises using one or more of: a flow splitter; one or more variable control valves; a variable flow diverter; one or more compressors; and one or more pumps.

Mixing the first fraction of the tail gas stream with the oxidant may comprise mixing the first fraction of the tail gas stream with a quantity of oxidant sufficient to drive decomposition of the feedstock gas in the feedstock gas reactor.

Mixing the second fraction of the tail gas stream with the source of the feedstock gas may comprise mixing the second fraction of the tail gas stream with a quantity of the feedstock gas sufficient to enable the quantity of the feedstock gas to reach a target pressure and a target temperature required for decomposition of the quantity of the feedstock gas in the feedstock gas reactor.

The method may further comprise introducing the mixture of the oxidant and the first fraction of the tail gas stream into the combustion chamber; introducing the mixture of the feedstock gas and the second fraction of the tail gas stream into the reaction chamber; and combusting the mixture of the oxidant and the first fraction of the tail gas stream in the combustion chamber to form one or more combustion product gases and to cause the one or more combustion product gases to flow into the reaction chamber via the one or more fluid flow paths and mix with the mixture of the feedstock gas and the second fraction of the tail gas stream, wherein, as a result of the mixing of the one or more combustion product gases with the mixture of the feedstock gas and the second fraction of the tail gas stream, energy is transferred from the one or more combustion product gases to the feedstock gas and thereby causes a chemical reaction to decompose the feedstock gas into one or more reaction product gases comprising hydrogen.

The method may further comprise adjusting one or more of: a pressure of the feedstock gas at an inlet of the reaction chamber; a temperature of the feedstock gas at the inlet of the reaction chamber; a pressure of the combustible gas at an inlet of the combustion chamber; and a temperature of the combustible gas at the inlet of the combustion chamber; a stoichiometry of air in a combustible gas mixture comprising the combustible gas; a quantity of gas vented from the combustion chamber; and a degree of hydrogen separation of a hydrogen separator through which the mixed product stream is passed.

Adjusting the temperature of the feedstock gas may comprise controlling the temperature of the feedstock gas to between about 1,000 K and about 1,300 K.

Adjusting the temperature of the combustible gas may comprise controlling the temperature of the combustible gas to between about 300 K and about 600 K.

Adjusting the pressure of the combustible gas may comprise controlling the pressure of the combustible gas to between about 12 bar and about 15 bar.

Adjusting the pressure of the feedstock gas may comprise controlling the pressure of the feedstock gas to between about 12 bar and about 15 bar.

The combustible gas may comprise pure oxygen.

The feedstock gas may comprise methane or natural gas.

The combustible gas may be introduced into the combustion chamber at a pressure that is equal to a pressure with which the feedstock gas is introduced into the reaction chamber.

The method may further comprise preheating the feedstock gas prior to introducing the feedstock gas into the reaction chamber.

The method may further comprise preheating the combustible gas prior to introducing the combustible gas into the combustion chamber.

A ratio of a volume of the reaction chamber to a volume of the combustion chamber may be less than or equal to about 10:1.

The ratio of the volume of the reaction chamber to the volume of the combustion chamber may be between about 3:1 and about 6:1.

A ratio of a length of the reaction chamber to a diameter of the reaction chamber may be less than or equal to about 30:1.

The ratio of the length of the reaction chamber to the diameter of the reaction chamber may be between about 8:1 and about 12:1

Introducing the combustible gas into the combustion chamber may occur simultaneously to introducing the feedstock gas into the reaction chamber.

During the extraction of the mixed product stream, a pressure within the reaction chamber may be reduced sufficiently rapidly so as to inhibit carbon fouling of the reaction chamber.

The pressure within the reaction chamber may be reduced by at least 25% over less than 1 second.

The pressure within the reaction chamber may be reduced by at least 50% over less than 1 second.

A pressure wave generated by the combustion of the combustible gas may inhibit carbon fouling of the reaction chamber.

The energy may be transferred from the one or more combustion product gases to the feedstock gas via gas dynamic compression and mixing.

Extracting the mixed product stream may comprise extracting from the reaction chamber at least a portion of reaction product gases formed as a result of the decomposition of the feedstock gas.

Extracting the mixed product stream may comprise extracting at least a portion of the one or more combustion product gases from the combustion chamber.

The method may further comprise venting at least some of the extracted one or more combustion product gases.

The method may further comprise adjusting the venting of the at least some of the extracted one or more combustion product gases.

The method may further comprise adjusting the venting comprises adjusting one or more of: a duration of the venting of the extracted one or more combustion product gases; a frequency of the venting of the extracted one or more combustion product gases; a size of one or more vent orifices used for the venting of the extracted one or more combustion product gases; a number of vents used for the venting of the extracted one or more combustion product gases; and a pressure drop across a vent flow path used for the venting of the extracted one or more combustion product gases.

The method may further comprise adjusting the venting comprises adjusting the venting based on a measured or inferred process parameter of the method.

The measured or inferred process parameter may comprise one or more of: a concentration of H₂ in the mixed product stream; a flow of the feedstock gas; and a ratio of H₂ to N₂ in the mixed product stream.

The steps of introducing the feedstock gas, introducing the combustible gas, and combusting the combustible gas may be repeated multiple times as part of multiple corresponding reaction cycles, and the step of venting the at least some of the extracted one or more combustion product gases may be performed every reaction cycle or every preset number of reaction cycles.

According to a further aspect of the disclosure, there is provided a system comprising: a feedstock gas reactor comprising: a reaction chamber; and a combustion chamber fluidly connected to the reaction chamber via one or more fluid flow paths; and an igniter; valving for controlling flow of gases into and out of the feedstock gas reactor; and one or more controllers configured to perform a method comprising: controlling the valving to introduce a feedstock gas comprising a hydrocarbon into the reaction chamber; controlling the valving to introduce a combustible gas into the combustion chamber; and controlling the igniter to combust the combustible gas in the combustion chamber so as to form one or more combustion product gases and so as to cause the one or more combustion product gases to flow into the reaction chamber via the one or more fluid flow paths and mix with the feedstock gas, wherein, as a result of the mixing of the one or more combustion product gases with the feedstock gas, energy is transferred from the one or more combustion product gases to the feedstock gas and thereby causes a chemical reaction to decompose the feedstock gas into one or more reaction product gases comprising hydrogen; controlling the valving to extract a mixed product stream from the feedstock gas reactor, wherein the mixed product stream comprises hydrogen, carbon, and water; and controlling the valving to recycle at least a portion of the mixed product stream to the feedstock gas reactor.

The system may further comprise a carbon separator for separating at least some of the carbon from the mixed product stream.

The carbon separator may comprise one or more of: a cyclone; a sintered metal filter; and a bag filter.

The system may further comprise a hydrogen separator for separating at least some of the hydrogen from the mixed product stream.

The hydrogen separator may comprise one or more of: a membrane separator; a polymeric membrane separator; a palladium membrane separator; a chemical adsorption device; a pressure swing adsorption device; and a temperature swing adsorption device.

The membrane separator may be pressure swing adsorption device.

The system may further comprise a tail gas stream splitting device for recycling a tail gas stream to the feedstock gas reactor, wherein the tail gas stream comprises the at least a portion of the mixed product stream with at least some carbon and at least some hydrogen separated therefrom.

The tail gas stream splitting device may be configured to: mix a first fraction of the tail gas stream with an oxidant; and mix a second fraction of the tail gas stream with a source of the feedstock gas.

The tail gas stream splitting device may comprise one or more of: a flow splitter; one or more variable control valves; a variable flow diverter; one or more compressors; and one or more pumps.

The first fraction plus the second fraction may equal 1.

The combustible gas may comprise pure oxygen.

The feedstock gas may comprise methane or natural gas.

The system may further comprise a heat exchanger for preheating the feedstock gas prior to introducing the feedstock gas into the reaction chamber.

The system may further comprise a heat exchanger for preheating the combustible gas prior to introducing the combustible gas into the combustion chamber.

A ratio of a volume of the reaction chamber to a volume of the combustion chamber may be less than or equal to about 10:1.

The ratio of the volume of the reaction chamber to the volume of the combustion chamber may be from about 3:1 to about 6:1.

A ratio of a length of the reaction chamber to a diameter of the reaction chamber may be less than or equal to about 30:1.

The ratio of the length of the reaction chamber to the diameter of the reaction chamber may be between about 8:1 and about 12:1.

The ratio of the length of the reaction chamber to the diameter of the reaction chamber may be about 10:1.

The system may further comprise one or more vents located according to one or more of the following: in the combustion chamber; downstream of the feedstock reactor; downstream of a carbon separator; and in a recirculation line for recycling the at least a portion of the mixed product stream.

The one or more controllers may be further configured to adjust one or more of: a duration that the one or more vents are open; a frequency of opening of the one or more vents; and a size of one or more orifices of the one or more vents.

This summary does not necessarily describe the entire scope of all aspects. Other aspects, features, and advantages will be apparent to those of ordinary skill in the art upon review of the following description of specific embodiments.

### Brief Description Of The Drawings

The accompanying drawings illustrate non-limiting example embodiments of the disclosure. The drawings are schematic or simplified representations intended only to clearly illustrate various aspects of the disclosure.
FIG. 1 illustrates tail gas being recirculated to a pulsed methane pyrolysis reactor, according to an embodiment of the disclosure.
FIG. 2 shows representative product gas compositions with venting (a) and without venting (b), according to an embodiment of the disclosure.
FIG. 3 shows functional aspects of a pulsed methane pyrolysis system with tail gas recycling, according to an embodiment of the disclosure.
FIG. 4 shows an individual pulsed methane pyrolysis reactor and process control elements for managing reaction and venting cycles, according to an embodiment of the disclosure.
FIGS. 5A and 5B show different arrangements of a mixing chamber and a combustion chamber, according to an embodiment of the disclosure.
FIG. 5C is a schematic diagram of a method of cracking natural gas, according to an embodiment of the disclosure.
FIG. 6 shows different configurations of a system comprising bundled reactors operating out of phase, according to an embodiment of the disclosure.
FIG. 7 shows bundled reactors rotating around stationary valves, according to an embodiment of the disclosure.
FIG. 8 is a schematic block diagram of a combustion chamber and a mixing chamber used to provide mixing of a feedstock gas with a combustible gas, and a third chamber to which the combustible and feedstock gas mixture is directed and in which one or more products are produced from the mixture, according to an embodiment of the disclosure.
FIG. 9 is a schematic block diagram of a combustion chamber and a mixing chamber used to provide mixing of a feedstock gas with a combustible gas, and in which one or more products are produced from the mixture, according to an embodiment of the disclosure.
FIG. 10 is a schematic block diagram of a combustion chamber and a mixing chamber used to provide mixing of a feedstock gas with a combustible gas, and in which one or more products are produced from the mixture, and wherein recycled gases are used to provide thermal energy for the process, according to an embodiment of the disclosure.
FIG. 11 is a schematic diagram of a combustion chamber located within a mixing chamber, according to an embodiment of the disclosure,
FIG. 12 is a schematic diagram of a combustion chamber located outside a mixing chamber, according to an embodiment of the disclosure.
FIG. 13 shows a combustion chamber arranged within a mixing chamber, according to an embodiment of the disclosure.
FIG. 14 shows a multi-reactor bundle with stationary reactors and rotating valves, according to an embodiment of the disclosure.

### Detailed Description

The present disclosure seeks to provide methods of producing one or more products using a feedstock gas reactor. While various embodiments of the disclosure are described below, the disclosure is not limited to these embodiments, and variations of these embodiments may well fall within the scope of the disclosure which is to be limited only by the appended claims.

The present disclosure proposes a thermal hydrocarbon pyrolysis reactor and method of operation that both minimize the CO₂ emissions associated with the production of reaction heat and accommodate for actual feedstocks that may contain non-reactive species or impurities. In particular, there is proposed a novel way to increase the productivity of, and reduce the greenhouse gas emissions from, a hydrocarbon pyrolysis reactor by recycling the residual product gas stream (tail gas) back to the reactor after the separation of product hydrogen, solid carbon, and water.

According to embodiments of the disclosure, methods described herein use pulsed combustion to supply the heat required for thermal pyrolysis, or hydrocarbon dissociation. This pulsed methane pyrolyzer (PMP) process is described in co-pending PCT Publication No. WO 2020/118417 A1, hereby incorporated by reference in its entirety. The PMP process represents a viable alternative to conventional SMR-based methods for large-scale hydrogen production, is more cost-competitive, and can reduce relative carbon emissions by over 90%.

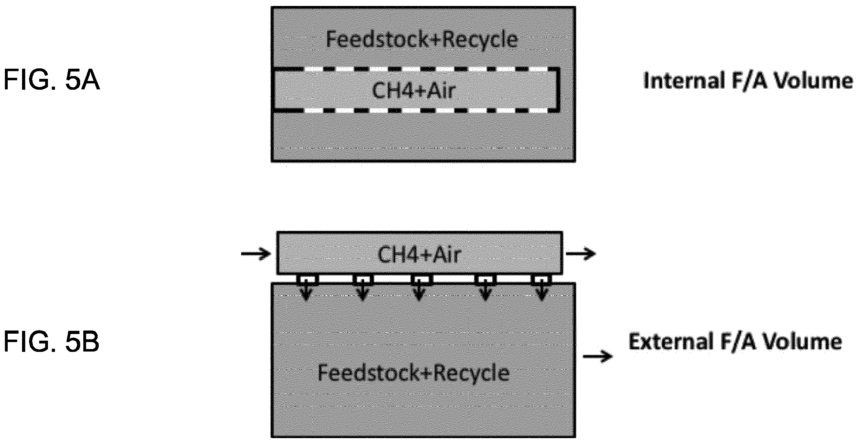

With reference to FIGS. 5A-14, there will now be described embodiments a PMP pyrolyzer or reactor that may be used with any of the methods described herein. The pyrolyzer may operate according to an unsteady, constant-volume pulsed reaction process to produce hydrogen and carbon products from a natural gas-based feedstock. A separate chamber of combustible gases and an oxidant provides the energy for the reaction, and is transferred directly to the feedstock mixing chamber by gas-dynamic compression and rapid mixing thermal energy exchange via direct contact. In the discussion below, air is used as the oxidant; however, other oxidants such as pure oxygen can be used in the process. Furthermore, the feedstock gas and combustible gas can comprise the same gas or gas mixture or can comprise different gases or gas mixtures. In some embodiments, the combustible gas may comprise a recycled gas mixture.

The reactor comprises a mixing chamber and a combustion chamber. These chambers are connected via a number of passageways that are always open. In some embodiments, the reactor comprises a perforated tube (the combustion chamber) within a larger solid tube (the mixing chamber); see FIG. 5A. In other embodiments, the combustion chamber can be external to the mixing chamber (as shown in FIG. 5B). External valves provide the feedstock, oxidant and combustible gas (shown as CH₄) as well as the discharged hydrogen, carbon and other gases produced during the reaction.

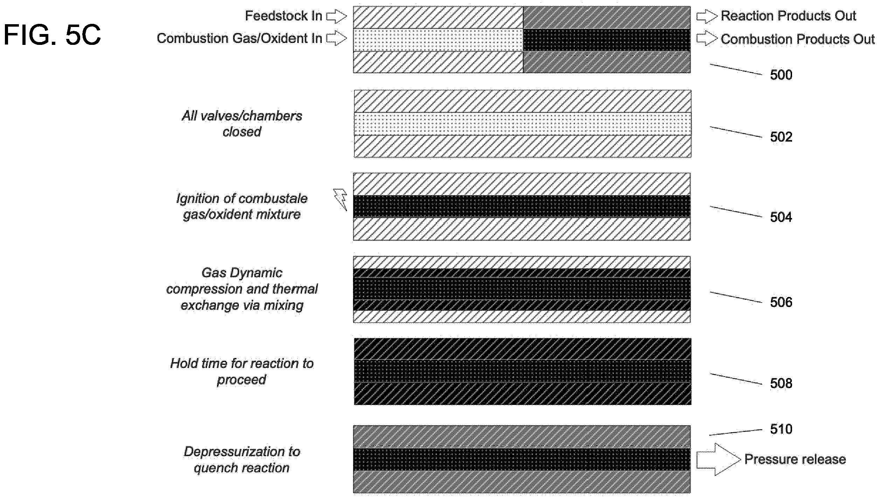

Turning to FIG. 5C, at the start of the cycle, the mixing chamber is filled with the products of the previous reaction cycle. The mixing chamber is filled with a mixture of products of the feedstock reaction plus a portion of the products of the combustion reaction. The combustion chamber is predominantly filled with the products of the combustion reaction. At 500, fresh feedstock and perhaps some recycled product gases are introduced into the mixing chamber to displace the products of the previous cycle from the end of the mixing chamber. At the same time, a combustible gas/air mixture is introduced into the combustion chamber, displacing the products of combustion from the end of the combustion chamber. At 502, all inlet and outlet valves are closed, creating a closed volume. At 504, the gases in the combustion chamber are then ignited resulting in a pressure and temperature increase within the combustion chamber. At 506, the passageways between the combustion chamber and the mixing chamber allow the combustible gas products to enter into the mixing chamber thereby compressing the feedstock gases and increasing their pressure and temperature. In addition, the hot combustion chamber gas products mix with the feedstock gases and thereby transfer their thermal energy to the feedstock gases, further increasing their temperature. The resulting temperature and pressure of the feedstock gases causes a reaction to occur. At 508, the reaction is allowed to proceed for a period of time to complete the desired reaction and develop the desired products. At 510, the pressure within the mixing chamber is rapidly lowered by releasing the products to an external volume (not shown). Combustion product gases remaining in the combustion chamber may be vented out with the mixing chamber gases or vented out separately though a dedicated port. The pressure reduction in the mixing chamber reduces the temperature and stops or quenches the reaction. This rapid depressurization and expansion also has the desirous effect of removing solid reaction products, such as carbon, from the reactor walls. In addition, the pressure wave generated from the combustion may strip carbon deposits from the reactor walls.

If the feedstock and combustible gases are premixed, the mixture may not ignite, as it is too rich. Therefore, the mixing chamber and combustion chamber are distinct and separate prior to ignition, such that no or preferably very little mixing occurs between the feedstock gas and the combustible gas.

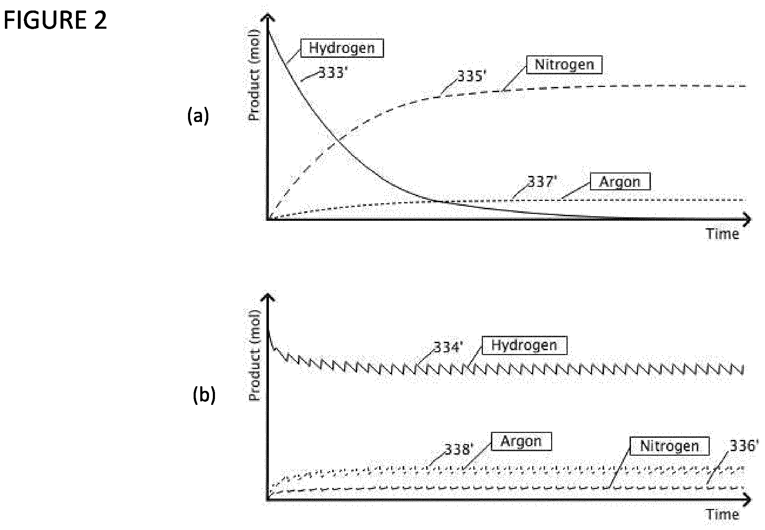

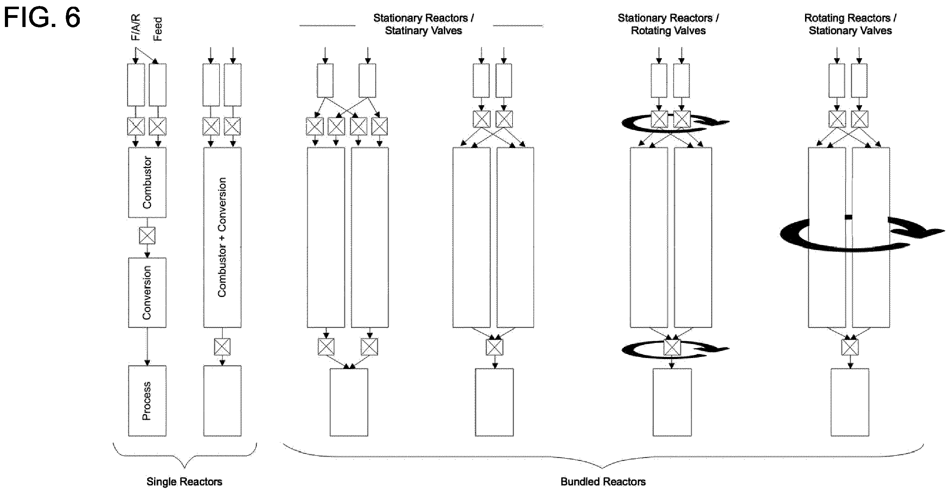

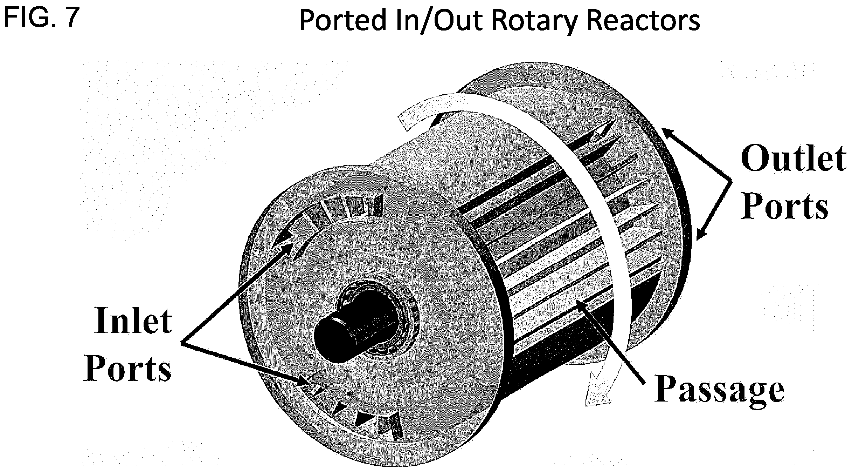

A number of reactor systems may be bundled together and operated slightly out of phase with each other to produce a continuous flow into and out of the reactor system. Valves can be stationary or rotating, as shown in FIG. 6. In some embodiment, the reactors can be rotated and the valves may remain stationary (see FIG. 7, modified from FIG. 2 of Wave rotor design method with three steps including experimental validation, Chan Shining et al., Journal of Engineering for Gas Turbines and Power, December 2017, the entirety of which is hereby incorporated by reference).

Various parameters may be adjusted to enable the reactor to work effectively. The feedstock gas may be preheated to just below the temperature at which it starts to react, before being introduced into the mixing chamber. A typical temperature would be in the range of 600 K - 1,300 K, depending on the feedstock components and working pressures.

Furthermore, the combustible gas / oxidant mixture being introduced may also be preheated before entering the combustion chamber. A typical temperature would be in the range of 400 K - 700 K depending on the combustible gases used. Preheating the combustible gas / oxidant mixture may improve the efficiency of the process such that more combustion energy is transferred to the reactants rather than being used to heat the products of combustion.

The volume ratio between the mixing chamber and combustion chamber should be set such that the correct amount of energy contained in the combustion chamber is provided to the mixing chamber to produce the desired products. There should also be sufficient combustible gas products entering the mixing chamber to provide effective mixing. A volume ratio of < 10:1 is generally desired. When using air as the oxidant, nitrogen may be beneficial as a non-reactive gas that promotes a lower volume ratio and increases mixing. When using pure oxygen as the oxidant, another gas such as CO₂ may provide the same benefit as nitrogen in the air as oxidant case. Introducing additional CO₂ to the combustible gas mixture may result in greater solid carbon production.

The length-to-diameter ratio is important to obtain efficient energy transfer from the combustion chamber to the mixing chamber. Short, large-diameter reactors will tend to have poor mixing while long, skinny reactors will develop challenges in introducing the feedstock and combustible gases into the reactor along its length. A length-diameter ratio of < 30:1 is generally desired.

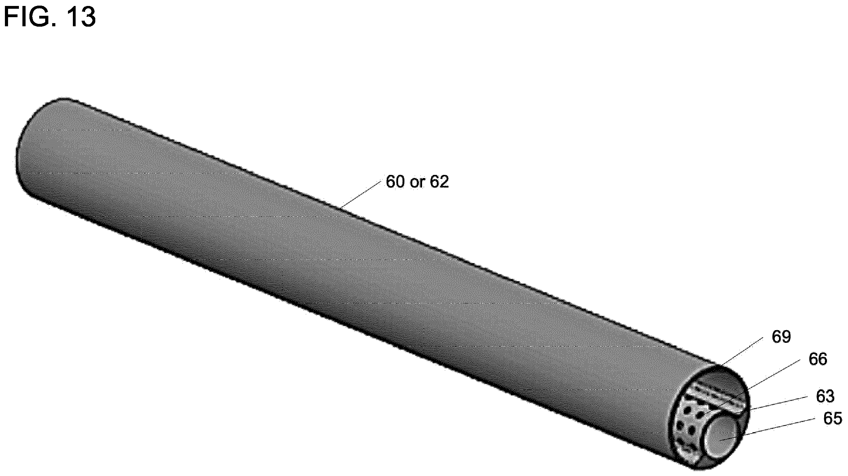

According to some embodiments, the reactor uses methane (or natural gas) in addition to some recycled product gases as the feedstock gas, and a recycled gas / oxidant mixture as the combustible gases. The reactor may be designed and operated to maximize the production of hydrogen and solid carbon in the reaction products stream. The reactor may comprise a combustion chamber, being a perforated tube, inside a mixing chamber. The perforated combustion chamber may be offset from the center of the mixing chamber and bonded to a wall of the mixing chamber to provide structural integrity and support, as can be seen in FIG. 13. The mixing chamber / combustion chamber volume ratio may be less than or equal 10:1 and the length-to-diameter ratio may be 10:1. In some embodiments the mixing chamber / combustion chamber volume ratio may be about 6:1, and in some embodiments the mixing chamber / combustion chamber volume ratio may be about 3.5:1.

The reactor may be operated at a sufficiently high pressure such that the resulting hydrogen can be purified using standard pressure swing absorption technology. According to some embodiments, product gases such as unreacted methane (CH₄), carbon monoxide (CO) and some hydrogen are recycled and mixed with more methane to produce the feedstock gas mixture to the reactor. The combustible gas mixture comprises the recycled gas mixture in addition (in the case of an air-blown reactor) to the CO₂ removed from the CO₂ removal system, and pure oxygen. In some embodiments, the recycled gas mixture flowing to both the combustion and mixing chambers contains CO₂ in addition to CH₄, CO and H₂. The feedstock gas mixture and the combustible gas mixture are preheated to ~900K and ~600K respectively, from thermal energy recovered from the reactor products stream via a multi-stream heat exchanger. In alternative embodiments, the mixing chamber / combustion chamber volume ratio is 3.5:1, methane (or natural gas) / air mixture is used for the combustible gases.

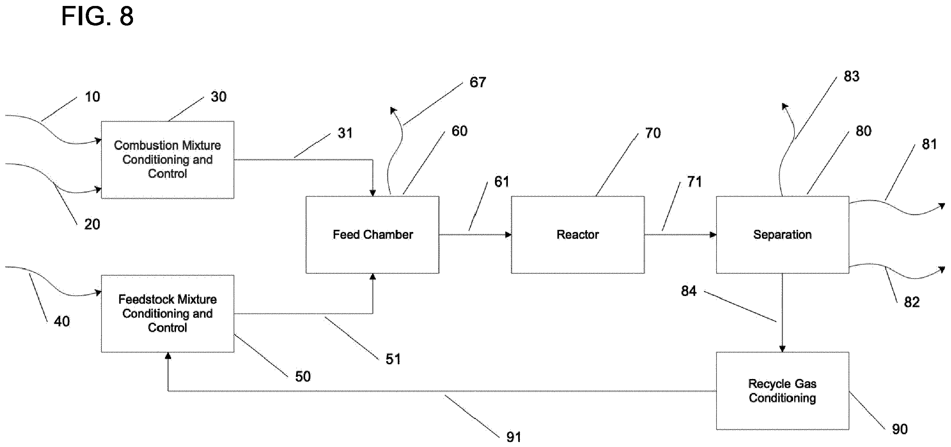

With reference to FIGS. 8-14, there will now be described further embodiments of the disclosure.

With reference to FIG. 8, combustible gas 10 and oxidant gas 20 enter the combustion mixture conditioning and control system 30 which conditions the combustible gas mixture 31 to the correct temperature and pressure required by chamber 60. Feedstock gas 40 and recycle gas mixture 91 enter the feedstock mixture conditioning and control system 50 which conditions the feedstock mixture 51 to the correct temperature and pressure required by chamber 60. In some embodiments, a recycle gas mixture is not available and only the feedstock gas 40 enters the feedstock mixture conditioning and control system 50.

Chamber 60 is a constant volume device which uses the combustion energy from the conditioned combustible gas mixture 31 to increase the pressure and temperature of the conditioned feedstock mixture 51 to a reaction ready level. A combustion product gas mixture 67 comprising mainly of the combustion products of combusted conditioned combustible gas mixture 31 may be vented from chamber 60. The reaction ready gas mixture 61 enters the reactor 70, whereby it remains until the gas mixture is converted in a constant volume endothermic reaction to the reacted product mixture 71. The constant volume reaction is an unsteady process which operates in a batch mode and requires control of flow timing. This is accomplished by flow control in conditioning systems 30, 50, and separation and control system 80.

The reacted product mixture 71 enters the product separation and control system 80 which stops the reaction in reactor 70 by reducing the pressure and temperature of the desired reacted product mixture 71 and separates and/or purifies the individual product components 81, 82, the unwanted products 83 and the recycle gas mixture 84. The recycle gas mixture 84 enters the pre-conditioning recycle gas system 90 where the recycle gas mixture 84 is pre-conditioned to the desired temperature and pressure and flows to the feedstock mixture conditioning and control system 50.

In some embodiments, the combustible gas 10 and the feedstock gas 40 are natural gas, and the oxidant gas 20 is air. The desired reaction in reactor 70 is methane pyrolysis generally given by the following equation:

CH₄ (methane) + energy → C (carbon) + 2H₂ (hydrogen)

The individual product 81 is hydrogen gas, the individual product 82 is carbon, and the unwanted products 83 are primarily carbon dioxide, nitrogen and water. The recycle gas mixture 84 comprises primarily of unreacted natural gas, hydrogen, nitrogen and carbon monoxide.

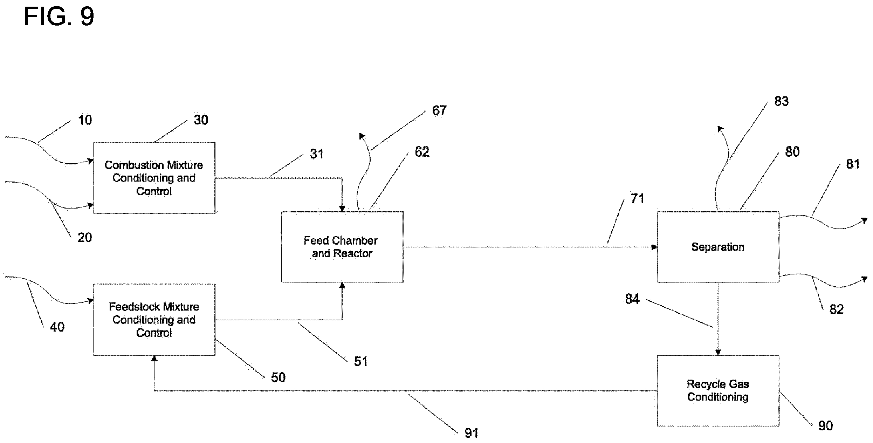

The system in FIG. 9 is similar to that of FIG. 8 with the exception that the chamber 60 and the reactor 70 are combined into the constant volume reactor 62.

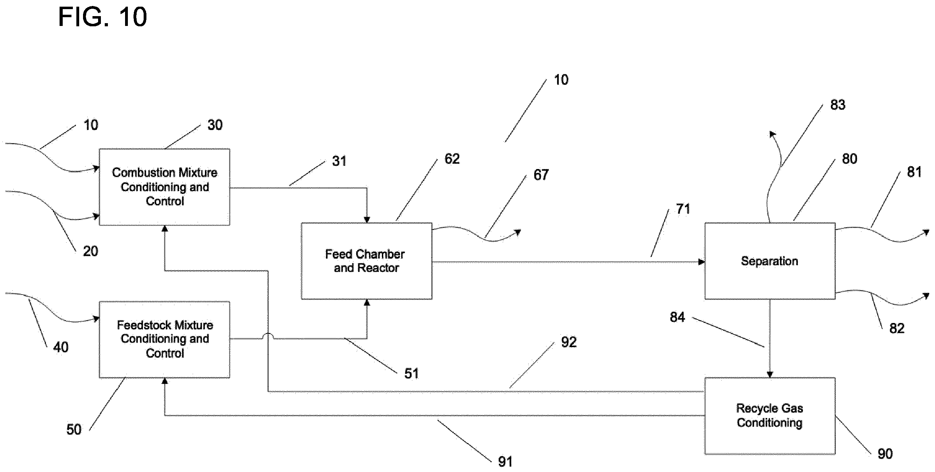

FIG. 10 is similar to FIG. 9 but with a portion of recycle mixture 84, conditioned in pre-conditioned recycled gas conditioner 90, sent to the combustible gas conditioner and control system 30 to offset the amount of combustible gas 10 required.

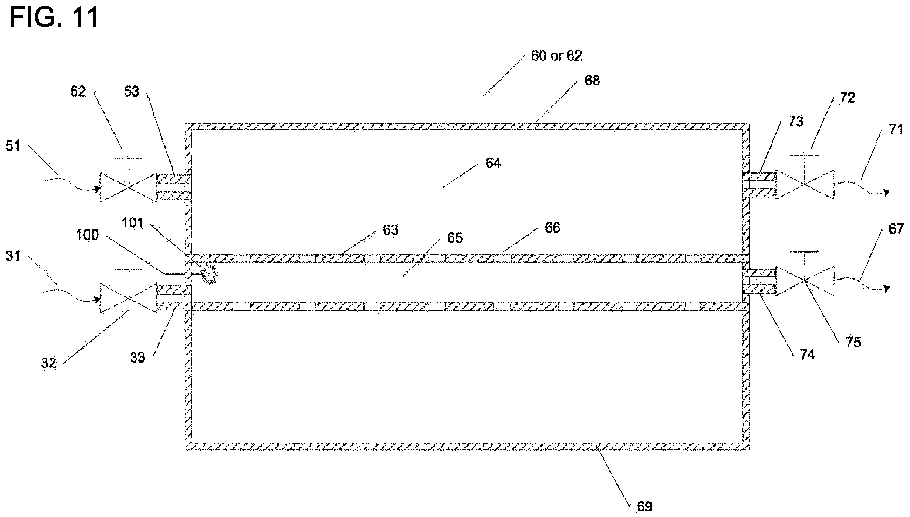

FIG. 11 represents a cross-sectional view of either chamber 60 or constant volume reactor 62. In this description, it represents constant volume reactor 62.

Constant volume reactor 62 comprises a combustion volume 65 contained within combustion chamber 63. Combustion chamber 63 is surrounded by reactor volume 64 which is contained in reactor chamber 68. Passageways 66 connect combustion volume 65 to reactor volume 64. Although combustion chamber 63 is shown in the center of reactor chamber 68, the combustion chamber 63 can be located anywhere in reactor chamber 68, including against the outside wall 69 of the reactor chamber 68.

Conditioned combustible gas mixture 31 enters combustion chamber 63 through combustible gas mixture valve 32 and passageway 33, displacing any combustion product gas mixture 67 present in combustion volume 65 out of reactor 62 via passageway 74 and combustion product valve 75. Conditioned feedstock gas mixture 51 enters mixing chamber 68 through feedstock gas mixture valve 52 and passageway 53, displacing desired reacted product mixture 71 in reactor volume 64 out of reactor 62 via passageway 73 and product valve 72. Both the conditioned combustible gas mixture 31 and the conditioned feedstock gas mixture 51 may simultaneously enter constant volume reactor 62 at the same pressure such that there is very little mixing via passageways 66.

Once predominantly all the combustible gas mixture 67 and desired product mixture 71 is displaced from reactor 62, combustion product valve 75 and product valve 72 are closed. Once the desired reactor pressure is reached, combustible gas mixture valve 32 and feedstock gas mixture valve 52 are closed, creating a closed volume in reactor 62. Igniter 100 creates ignition energy 101 which allows conditioned combustible gas mixture 31 in combustion chamber 63 to combust in an exothermic reaction creating combustion product gas mixture 67 at elevated temperature and pressure. Due to the resulting pressure difference between combustion chamber 63 and mixing chamber 68, a portion of combustible gas mixture 67 enters reactor volume 64, compressing feedstock gas mixture 51 to a higher pressure. Simultaneously, this portion of hot combustible gas mixture 67 mixes and heats feedstock gas mixture 51 by conduction, convection and radiation. Feedstock gas mixture 51 is now at an elevated temperature and pressure which creates the conditions for an endothermic reaction to occur. Constant volume reactor 62 is maintained as a closed volume until the endothermic reaction proceeds long enough to create desired product mixture 71. Once this condition is reached, product valve 72 and combustion product valve 75 are opened which drops the pressure and temperature, stopping the endothermic reaction. The process then repeats.

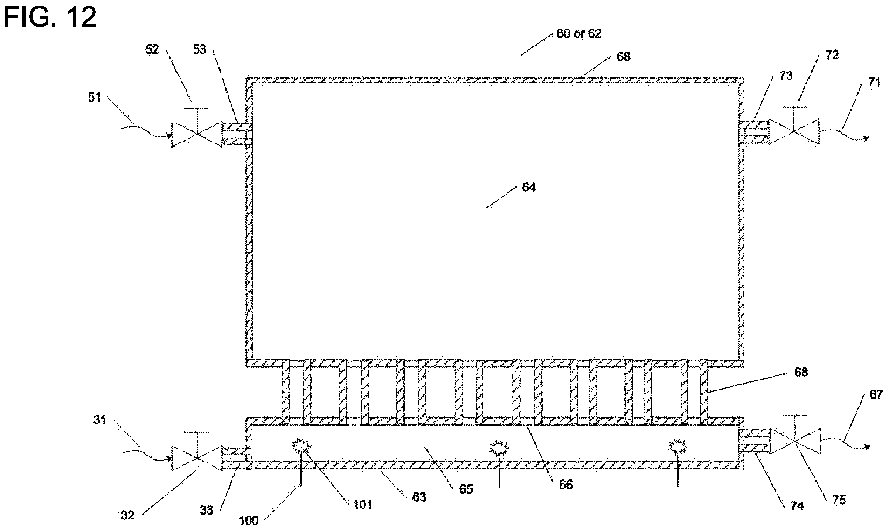

FIG. 12 shows an embodiment of chamber 60 or constant volume reactor 62 with combustion chamber 63 external to mixing chamber 68. Combustion volume 65 is connected to reactor volume 64 via a number of passages 68. Multiple ignitors can be positioned along combustion chamber 63 to create specific combustion conditions if required. Multiple ignitors can also be positioned in the constant volume reactor 62 of FIG. 11 if the combustion chamber 63 is positioned next to reactor chamber wall 69.

FIG. 13 shows an isometric view of an embodiment of chamber 60 or constant volume reactor 62 with the combustion chamber 63 directly bonded with the reactor chamber wall 69 of reactor chamber 68. Directly bonding combustion chamber 63 to reactor chamber wall 69 provides structural support and alignment to combustion chamber 63, and essentially creates a one-piece chamber 60 or constant volume reactor 62.

In order to create a quasi or semi-continuous flow system, multiple chambers 60 or constant volume reactors 62 can be arranged together and operated out of phase such that each chamber or reactor is undergoing a different part of the process described in FIG. 11.

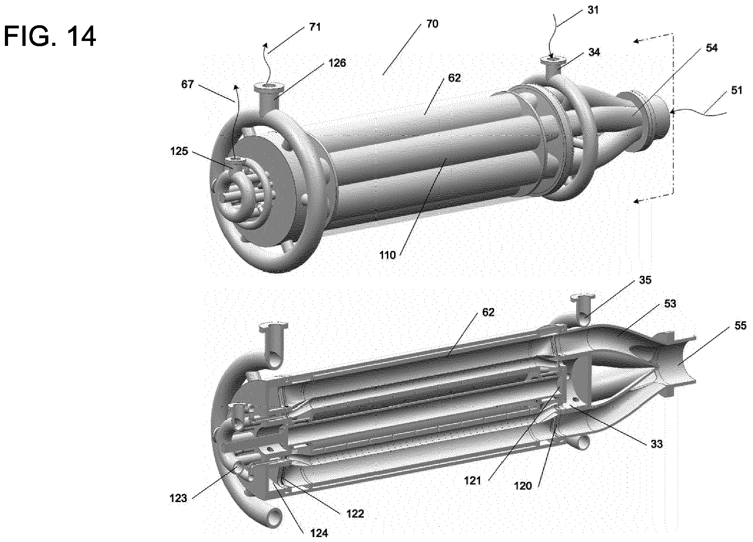

FIG. 14 shows an embodiment of a multi-tube reactor 110, with a multitude of individual constant volume reactors 62 shown in FIG. 14 arranged in a circular pattern. Conditioned combustible gas mixture 31 enters multitube reactor 110 via passageway 34 into plenum 35. Conditioned feedstock gas mixture 51 enters multitube reactor 110 via passageway 54 into plenum 55. Timing of conditioned combustion and conditioned feedstock gas mixtures entering multitube reactor 110 is controlled by inlet rotating valve 120 which is part of rotating valve assembly 121. Inlet rotating valve 120 performs the same function as combustible gas mixture valve 32, passageway 33, feedstock gas mixture valve 52, and passageway 53 described in FIG. 11. The timing of combustion product gas mixture 67 and desired product mixture 71 leaving multitube reactor 110 is controlled by outlet rotating valve 122 which is part of rotating valve assembly 121. Outlet rotating valve 122 performs the same function as combustion product valve 72, passageway 73, feedstock product valve 75, and passageway 74 described in FIG. 11.

Combustion product gas mixtures 67 from each constant volume reactor 62 is collected in combustion product plenum 123 and distributed out of the multitube reactor 110 via passageway 125. Product mixture 71 from each constant volume reactor 62, is collected in product plenum 124 and distributed out of the multitube reactor 110 via passageway, 126.

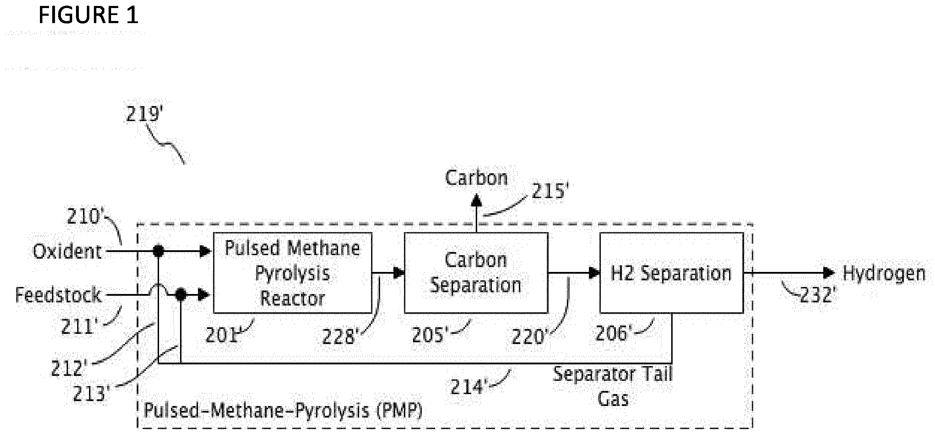

There will now be described, in connection with FIGS. 1-4, methods of using a feedstock gas reactor (such as any of the feedstock gas reactors described above in connection with FIGS. 5A-14) to produce one or more products.

Turning to FIG. 1, there is shown the operation of a pulsed flow batch reaction system 219', with hydrocarbon feedstock 211' and oxidant 210' loaded into a pulsed methane pyrolysis (PMP) reactor 201'. The oxidant 210' is combined with a portion of the fuel feedstock 211' in a combustion reaction to generate the heat required to drive the pyrolysis reaction of the remaining feedstock 211'. Since the reactor 201' is a closed, constant-volume device, once the feedstock 211' and oxidant 210' are loaded into the reactor 201', the combustion reaction both heats and pressurizes the reactor 201' to a point where thermal pyrolysis is initiated. The reaction is maintained within the reactor 201' for a desired hold time allowing the hydrocarbon feedstock 211' to be decomposed at which point the reactor 201' is opened to the downstream flow path, depressurizing the reactor 201' and quenching the reaction. At this point, a mixed product stream 228', containing hydrogen, solid carbon, unreacted feedstock, and products of the combustion reaction including carbon oxides (CO₂ and CO) and water, is extracted from reactor 201'. Carbon is removed from mixed product stream 228' using a suitable carbon separator 205' which may be, for example, a filter or cyclone separator. Water is also substantially removed from mixed product stream 228' using means known in the art (not shown). The resulting synthesis gas (syngas) stream 220' is passed to a hydrogen separator 206'. The hydrogen separator 206' may be, for example, a pressure swing adsorption unit (PSA), a membrane separator, or a cryogenic separator. Once a recoverable fraction of H₂ is removed as a product stream 232', the residual tail gas 214' is recirculated back to the reactor 201'.

Stripped of carbon and the majority of hydrogen and water, the tail gas 214' still contains a mixture of unreacted feedstock, residual hydrogen and other gases that were not separated in the hydrogen separator 206', and carbon oxides such as CO₂ and CO. Thus, the tail gas 214' has significant heating value to be used as fuel for the combustion reaction when sufficient oxidant 210' is mixed to oxidize a first fraction 212' of tail gas 214'. A second fraction 213' of tail gas 214' which is not needed for heat generation is recycled as feedstock to be further converted once pyrolysis conditions are achieved in the next reaction cycle. New feedstock 211' is mixed with the second fraction 213' of tail gas 214' such that the constant-volume reactor 201' is loaded to a target pressure. In this manner, as more gas is recycled, less new feedstock is required and therefore the conversion yield can be increased through the recirculation of tail gas 214', although production quantity might decrease. Maximizing the conversion efficiency per cycle in the reactor 201' is therefore useful for optimizing the overall effectiveness (production quantity and conversion efficiency) of the overall system 219'. This trade-off in performance is managed by selecting optimal operating parameters such as feedstock pre-heat temperature, pressure, the ratio of the volume of the combustion chamber to the volume of the reaction chamber in reactor 201', and oxidant stoichiometry.

If the feedstock is pure, for example methane (CH₄), and the oxidant is also pure oxygen (O₂), the system 219' will yield a pure product stream 228' of hydrogen, carbon, water, and no other emissions. The combustion products generated in the fuel oxidation step of the reaction will be fully decomposed by repeated cycling to the reactor 201', and no net CO₂ greenhouse gas emissions will be produced.

In practice, product streams are not completely pure, and accommodations must be made to manage these impurities. These more practical process adaptations are described below.

Hydrocarbon and oxidant feedstocks used in industry are rarely 100% pure. For example, if natural gas is used as a feedstock, it is generally not comprised of only methane (CH₄). Rather, it may be predominantly methane (~ 70% - 90%), and a mix of higher carbon-number hydrocarbon elements such as ethane (C₂), propane (C₃), butane (C₄), and (C₅₊) molecules. The gas may also contain reactive non-hydrocarbon molecules such as carbon monoxide (CO) and hydrogen (H₂) as well as non-reactive components such as nitrogen (N₂), helium (He), and carbon-dioxide (CO₂). The fraction of impurities depends greatly on the source of the feedstock. Of most significance to the PMP process are impurities such as non-reactive or inert elements which cannot be further dissociated in the reactor nor converted to hydrogen, carbon, or water. Feedstock impurities such as N₂ and He in natural gas can range from trace quantities in the parts-per-million (ppm) up to 5% N₂ and 2% He by mole fraction. Oxygen (O₂) used as an oxidant may similarly include impurities such as N₂ and argon (Ar). Argon may be present in oxygen separated from air in quantities up to 4%.

With reference to FIG. 2(a) which depicts only select gas stream quantities for clarity, impurities present in the feedstock in the reactor can accumulate as other components of the feedstock and combustible gas are converted and expelled as reaction products. As impurities accumulate and occupy increasing volume in the reactor, less feedstock can be loaded into the reactor, and less energy value is returned for reaction heat. As an example, if nitrogen 335' and argon 337' impurities concentrate in the recycled tail gas, the accumulation of impurities eventually achieves a steady-state concentration at which point no further reactants can be loaded and the production of desired reaction products such as hydrogen 333' is completely suppressed.

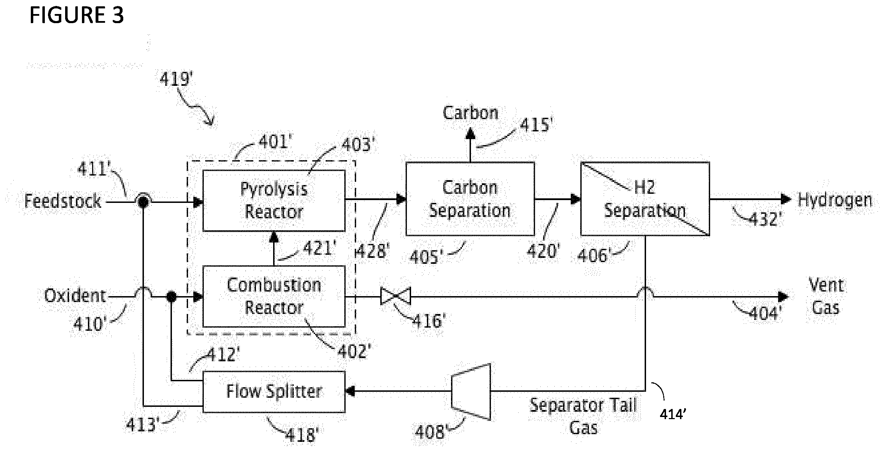

With reference to FIG. 3, the PMP reactor system 419' can be further enhanced to manage the presence of feedstock impurities. This embodiment includes a vent 416' which enables a periodic venting of a portion of the combustion product gas 404'. The periodic venting prevents the accumulation of impurities from reaching a level which suppresses desired product formation beyond an acceptable limit (for example, more than 3% product H₂ loss from an ideal baseline at which no impurities are present).

The overall PMP system 419' illustrates separate combustion chamber 402' and reaction chamber 403' which together are comprised in the PMP reactor 401'. The combustion chamber 402' is fed by a first fraction 412' of the high heat value recycled tail gas 412' and an oxidant 410' which may be O₂. The O₂ can be supplied by an oxygen separation unit (ASU - not shown) which may operate based on different technologies such as a separation membrane, selective pressure, a temperature-based adsorption unit (PSA/TSA), or a cryogenic separator. The reaction chamber 403' is loaded with a new feedstock stream 411' mixed with a second fraction 413' of the recycled tail gas 414'. The fractions 412' and 413' of tail gas 414' delivered to the combustion chamber 402' and reaction chamber 403', respectively, are governed by a flow splitter 418'.

The function of the flow splitter 418' is to allocate the appropriate amount of tail gas 414' to the combustion chamber 402', creating sufficient energy to sustain the pyrolysis reaction of feedstock gas in the reaction chamber 403'. In practice, the flows may be controlled either passively or actively. Passive means of controlling the flow may include physical flow paths with particular orifice sizes or flow path pressure drops such that the flow splits according to the desired ratio. Active control means may be employed to dynamically vary the split ratio during the operation of the reactor 401' in response to changing operating conditions or output rates. In this case, the control means may include active control valves, a variable diverter, or independently controlled recirculation compressors for each split stream 412', 413' fed from the same tail gas input 414'. According to some embodiments, approximately 20% of the recirculated tail gas 414' is diverted to the combustion chamber 403'.

Once the tail gas flow 414' has been split into a recycled combustion stream 412' and a recycled reaction stream 413', oxidant 410' is mixed with the combustion stream 412' to form a combustion gas mixture which is pre-heated and pressurized to the desired conditions. The pressure and temperature of the combustion gas mixture are controlled by a recycle stream compressor 408 and an oxidant feed compressor (not shown) which can be set to ensure the correct stoichiometry of oxidant to fuel contained in recycled combustion stream 412'. The combustion gas mixture may be subsequently pre-heated (not shown) using heat recovered from the mixed product stream 428 as detailed, for example, in PCT Publication WO 2020/118417 A1, incorporated herein by reference in its entirety. The feedstock 411' is similarly mixed with the recycled reaction stream 413' and controlled to the appropriate temperature and pressure by similar means. New feedstock 411' is added to the recycled reaction stream 413' to the extent there is volume available at the target temperature and pressure. Hence, new feedstock 411' will only make up for product removed from the system 419 or gas that has been vented. According to some embodiments, target temperature and pressure for the feedstock 411' at an inlet of reaction chamber 403' are about 1000 K and about 13.5 bar, target temperature and pressure for the combustible gas mixture 410' at an inlet of combustion chamber 402' are about 600 K and 13.5 bar, an oxidant stoichiometry is about 1.2, and a ratio of the volume of the combustion chamber 402' to the volume of the reaction chamber 403' is about 6:1, although these parameters can be varied over a wide range as deemed optimal for specific applications.

Once the combustion and pyrolysis reactions have completed, the contents of the reactor 401' are discharged and the mixed product stream 428' is quenched and directed to a carbon separator 405'. A volume of combustion products 404' can be vented to the environment by means of a vent 416'. The vent 416' may be a controlled valve, a fixed orifice, a vent line of a fixed or selectable pressure drop, or a similar device. The frequency and duration of the venting may be metered and controlled, and therefore the relative quantity of gas vented as a fraction of the mixed product stream 428' may be adjusted. The vented gas preferably contains a high proportion of accumulated impurities (such as N₂ and Ar) and a low proportion of valuable reaction products (H₂ and solid carbon). According to some embodiments, the vent gas 404' is drawn from the combustion chamber 402' as the reactor 401' is discharged, rather than from the mixed product stream 428'. After the combustion reaction occurs, a portion of the combustion products 421' expand into the reaction chamber 403' where they heat and pressurize the hydrocarbon feedstock. After the expansion and reaction are complete, the combustion chamber 402' and the reaction chamber 403' are at equal pressures and no further gas is exchanged. At this point in the process, the combustion chamber 402' contains only the residual fraction of combustion products that did not expand into the reaction chamber 403', and no products of the pyrolysis reaction. The gas composition within combustion chamber 402' is primarily a fraction of the accumulated impurities and non-reactive gases in the oxidant stream 410' and tail gas stream 414', and a fraction of the products of combustion comprising primarily CO₂ and water vapour. The vent system control may vary the residual combustion product gas that is vented as a fraction of the overall volume of residual gas in the combustion chamber 403' (from 0% to 100%). The vent 416' may be further operated at a desired frequency corresponding to a threshold of accumulated non-reactive gas constituents. This frequency may vary from once every reaction cycle, to once every n cycles. The frequency of venting may be fixed or variable depending on a measured gas or system performance quantity.

According to further embodiments of the disclosure, the hydrogen separator 406' may also have a selectivity to small molecules such as nitrogen. A pressure swing adsorption unit (PSA) employing a zeolite adsorption bed selectively adsorbs heavy molecules such as hydrocarbons (for example, methane (CH₄)), CO₂ and CO while allowing hydrogen to pass through, enabling an output stream of high-purity hydrogen (e.g., >99.5% purity if no other small molecules are present). If other small molecules such as nitrogen are present, however, the PSA may also allow to pass with the hydrogen a fraction of these species such that the hydrogen product stream 432' contains a dilute stream of impurities. For example, depending on the extraction source, natural gas may contain impurities of up to 5% by mole, and oxygen separated from air may contain impurities of up to 4% by mole. With this upper level of impurities, the product hydrogen stream 432' could have a purity of approximately 96%. The PSA may also act as a selective venting means for accumulated nitrogen. Because the PSA effectively selectively separates between 80% to 90% of the target species (in this case hydrogen with some N₂), only 10% to 20% of hydrogen product and accumulated N₂ is recycled back to the reactor 401'. According to some embodiments, a PSA H₂ separator 406' is employed which minimizes the degree of combustion product venting required to suppress the accumulation of feedstock impurities. The PSA adsorption materials can be tailored for the filtering selectivity of the PSA, enabling an added degree of freedom to further optimize the competing constraints of hydrogen purity, vent gas quantity, reactor product yield efficiency, and reactor throughput capacity.

With reference to FIG. 2(b) which again depicts only select gas stream quantities for clarity, if the appropriate degree of venting is selected, the accumulation of impurities 338', 336' is suppressed, and the continued yield of target reaction products, for example hydrogen 334', remains high. With reference to FIG. 3, if the vent gas 404' contains carbon oxides CO₂ or CO), a loss in carbon product will result and the venting of CO₂ will constitute a greenhouse gas emission stream. It is generally desirable to optimize the vent function and PSA separation performance to minimize the relative greenhouse gas emissions while preserving a maximal yield of desired reaction products.

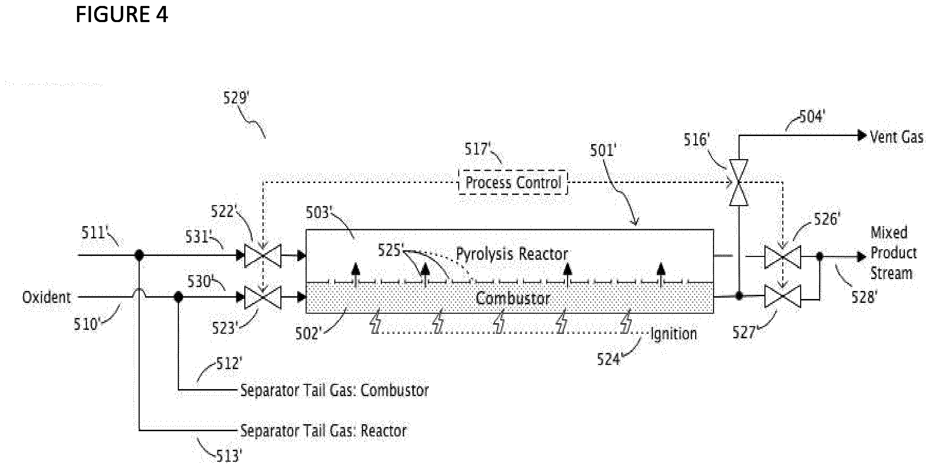

With reference to FIG. 4 which depicts the PMP reactor process 529' in more detail, the overall PMP reactor 529' is comprised of a constant-volume combustion chamber 502' and a constant-volume pyrolysis reaction chamber 503'. The two chambers are in communication through a series of jet orifices 525' between them. When combustion and reactant gases 510', 511' are loaded into the chambers 502' and 503' at equal pressures, no gas flow is transferred from one chamber to the other. When the combustible gas in the combustion chamber 502' is ignited by an ignition means 524', the combustible gas is rapidly oxidized and the temperature and pressure in the combustion chamber 502' rise dramatically. For example, with a reactant feed pressure of 13.5 bar and combustion and feedstock gas inlet temperatures of 600 K and 1000 K respectively, after combustion, the combustion chamber 502' may achieve temperatures and pressures of 3,300 K and 75 bar. At this point, the pressure between the two chambers 502' and 503' is equalized as hot combustion product gas expands through the orifices 525' until the two chambers 502' and 503' reach pressure equilibrium. As a result of this transfer and mixing of gases, the feedstock gas in the reaction chamber 503' is heated and pressurized, according to some embodiments, to over 20 bar and at least 1,350 K, at which point the natural gas feedstock quickly begins to decompose by thermal pyrolysis. At this point, the reaction chamber 503' contains decomposed natural gas products of hydrogen and solid carbon as well as residual combustion products, impurities such as nitrogen and argon, and any unreacted feedstock. The combustion chamber 502' contains only combustion product gases.

The pyrolysis reaction is quenched when the reaction chamber outlet valve 526' is opened and the reaction chamber 503' is de-pressurized. The combustion chamber 502' is also simultaneously depressurized by opening the combustion chamber outlet valve 527'. Simultaneous chamber depressurization may be important to avoid the further transfer of product gases between combustion chamber 502' and reaction chamber 503'. As the combustion product gas is depressurized, a vent valve 516' can be operated to divert a fraction of the combustion products 504' from combustion chamber 502' and vent them out of the system 529'. The degree of venting can be adjusted, for example, by controlling the frequency of operation of vent valve 516', controlling the duration of operation of vent valve 516', as well as by selecting an appropriate pressure drop across the overall vent flow stream. According to some embodiments, a size of one or more orifices of the vent valve 516' may be adjusted so as to control the venting. Operation of the venting mechanism enables the accumulation of impurities in the recycled tail gas stream to be limited. An ideal operating condition may be achieved if the vent valve 516' is be opened every reaction cycle to expel up to 80% of the residual combustion product gases.

The quenched pyrolysis reaction and un-vented combustion products are then combined as a mixed product stream 528'. Once carbon and water are removed from mixed product stream 528', all gases except for product hydrogen and accumulated nitrogen from the hydrogen separator are recycled to the reactor 501' so the only net emissions from the system 529' are from the vent gas 504'. In the example of an 80% combustion chamber gas vent every reaction cycle, this emission equates to approximately 0.36 tonnes of CO₂ per tonne of H₂ which represents an over 95% reduction in greenhouse gas emissions as compared to hydrogen production from even the lowest prior art greenhouse gas emitting natural gas reforming systems.

The timing of loading, reacting, and quenching the reactor 501' may be controlled by the sequencing of inlet and outlet valves. According to some embodiments, inlet valves 522', 523', outlet valves 526', 527', and vent valve 516' are coordinated by means of a fixed connection such as rotating valves connected to a common drive shaft or poppet valves sequenced by a cam shaft. According to some embodiments, the overall process control function 517' ensures that the reactor loading, discharging, and venting are suitably coordinated to ensure the operation of the reactor 501', including maintaining reaction hold times between discharging, re-loading, and metering the venting operation. The control mechanism may be a combination of dynamic controls and/or passive controls as previously discussed.

There has been described a practical process solution adapted to the use of non-ideal industrial feedstocks which can produce at industrial scale high-yield hydrogen with a valuable solid carbon by-product. In the case of ideal feedstocks, the PMP process with tail gas recirculation operates without any significant greenhouse gas emissions even when process heat is generated through hydrocarbon combustion. When non-ideal feedstocks are used, there has been proposed a means to operate with only selective venting to maintain high-reaction yields, creating only a relatively small fraction of greenhouse gas emissions as compared to incumbent technologies. The described combustion product vent strategy releases only a fraction of the post-ignition combustion chamber volume. The majority of combustion products are therefore converted into reaction products of hydrogen, solid carbon, and water. The net result of the process for non-ideal feedstocks is a reduction of greenhouse gas emissions of over 95% compared to incumbent industrial SMR plants, and near-zero operational greenhouse gas emissions for pure hydrocarbon and oxidant feedstocks.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through one or more intermediate elements or devices via an electrical element, electrical signal or a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

While the disclosure has been described in connection with specific embodiments, it is to be understood that the disclosure is not limited to these embodiments, and that alterations, modifications, and variations of these embodiments may be carried out by the skilled person without departing from the scope of the disclosure. It is furthermore contemplated that any part of any aspect or embodiment discussed in this specification can be implemented or combined with any part of any other aspect or embodiment discussed in this specification.

## Claims

1. A method of using a feedstock gas reactor comprising a reaction chamber fluidly connected to a combustion chamber via one or more fluid flow paths, the method comprising:
introducing a feedstock gas comprising a hydrocarbon into the reaction chamber;
introducing a combustible gas into the combustion chamber; and
combusting the combustible gas in the combustion chamber so as to form one or more combustion product gases and so as to cause at least a portion of the one or more combustion product gases to flow into the reaction chamber via the one or more fluid flow paths and mix with the feedstock gas, wherein, as a result of the mixing of the at a least a portion of the one or more combustion product gases with the feedstock gas, energy is transferred from the at least a portion of the one or more combustion product gases to the feedstock gas and thereby causes a chemical reaction to decompose the feedstock gas into one or more reaction product gases comprising hydrogen;
extracting a mixed product stream from the feedstock gas reactor, wherein the mixed product stream comprises hydrogen, carbon, and water; and
recycling at least a portion of the mixed product stream to the feedstock gas reactor.

2. The method of claim 1, wherein the mixed product stream consists of hydrogen, carbon, and water.

3. The method of claim 1 or 2, further comprising separating at least some of the carbon from the mixed product stream.

4. The method of any one of claims 1-3, further comprising separating at least some of the hydrogen from the mixed product stream.

5. The method of claim 4, wherein separating the at least some of the hydrogen comprises using pressure swing adsorption.

6. The method of any one of claims 1-5, wherein recycling the at least a portion of the mixed product stream to the feedstock gas reactor comprises:
separating at least some of the carbon and at least some of the hydrogen from the mixed product stream to form a tail gas stream; and
recycling the tail gas stream to the feedstock gas reactor.

7. The method of claim 6, wherein recycling the tail gas stream to the feedstock gas reactor comprises:
mixing a first fraction of the tail gas stream with an oxidant; and
mixing a second fraction of the tail gas stream with a source of the feedstock gas.

8. The method of claim 7, wherein recycling the tail gas stream comprises splitting the tail gas stream into the first and second fractions, and wherein the splitting comprises using one or more of: a flow splitter; one or more variable control valves; a variable flow diverter; one or more compressors; and one or more pumps.

9. The method of claim 7 or 8, wherein mixing the first fraction of the tail gas stream with the oxidant comprises mixing the first fraction of the tail gas stream with a quantity of oxidant sufficient to drive decomposition of the feedstock gas in the feedstock gas reactor.

10. The method of any one of claims 7-9, wherein mixing the second fraction of the tail gas stream with the source of the feedstock gas comprises mixing the second fraction of the tail gas stream with a quantity of the feedstock gas sufficient to enable the quantity of the feedstock gas to reach a target pressure and a target temperature required for decomposition of the quantity of the feedstock gas in the feedstock gas reactor.

11. The method of any one of claims 7-10, further comprising:
introducing the mixture of the oxidant and the first fraction of the tail gas stream into the combustion chamber;
introducing the mixture of the feedstock gas and the second fraction of the tail gas stream into the reaction chamber; and
combusting the mixture of the oxidant and the first fraction of the tail gas stream in the combustion chamber to form one or more combustion product gases and to cause the one or more combustion product gases to flow into the reaction chamber via the one or more fluid flow paths and mix with the mixture of the feedstock gas and the second fraction of the tail gas stream, wherein, as a result of the mixing of the one or more combustion product gases with the mixture of the feedstock gas and the second fraction of the tail gas stream, energy is transferred from the one or more combustion product gases to the feedstock gas and thereby causes a chemical reaction to decompose the feedstock gas into one or more reaction product gases comprising hydrogen.

12. The method of any one of claims 1-11, further comprising adjusting one or more of:
a pressure of the feedstock gas at an inlet of the reaction chamber;
a temperature of the feedstock gas at the inlet of the reaction chamber;
a pressure of the combustible gas at an inlet of the combustion chamber; and
a temperature of the combustible gas at the inlet of the combustion chamber;
a stoichiometry of air in a combustible gas mixture comprising the combustible gas;
a quantity of gas vented from the combustion chamber; and
a degree of hydrogen separation of a hydrogen separator through which the mixed product stream is passed.

13. The method of any one of claims 1-12, wherein the combustible gas comprises pure oxygen.

14. The method of any one of claims 1-13, wherein the feedstock gas comprises methane or natural gas.

15. The method of any one of claims 1-14, wherein extracting the mixed product stream comprises extracting from the reaction chamber at least a portion of reaction product gases formed as a result of the decomposition of the feedstock gas.

16. The method of any one of claims 1-15, wherein extracting the mixed product stream comprises extracting at least a portion of the one or more combustion product gases from the combustion chamber.

17. The method of claim 16, further comprising venting at least some of the extracted one or more combustion product gases.

18. The method of claim 17, further comprising adjusting the venting of the at least some of the extracted one or more combustion product gases.

19. The method of claim 18, wherein adjusting the venting comprises adjusting one or more of:
a duration of the venting of the extracted one or more combustion product gases;
a frequency of the venting of the extracted one or more combustion product gases;
a size of one or more vent orifices used for the venting of the extracted one or more combustion product gases;
a number of vents used for the venting of the extracted one or more combustion product gases; and
a pressure drop across a vent flow path used for the venting of the extracted one or more combustion product gases.

20. A system comprising:
a feedstock gas reactor comprising:
a reaction chamber; and
a combustion chamber fluidly connected to the reaction chamber via one or more fluid flow paths; and
an igniter;
valving for controlling flow of gases into and out of the feedstock gas reactor; and
one or more controllers configured to perform a method comprising:
controlling the valving to introduce a feedstock gas comprising a hydrocarbon into the reaction chamber;
controlling the valving to introduce a combustible gas into the combustion chamber; and
controlling the igniter to combust the combustible gas in the combustion chamber so as to form one or more combustion product gases and so as to cause the one or more combustion product gases to flow into the reaction chamber via the one or more fluid flow paths and mix with the feedstock gas, wherein, as a result of the mixing of the one or more combustion product gases with the feedstock gas, energy is transferred from the one or more combustion product gases to the feedstock gas and thereby causes a chemical reaction to decompose the feedstock gas into one or more reaction product gases comprising hydrogen;
controlling the valving to extract a mixed product stream from the feedstock gas reactor, wherein the mixed product stream comprises hydrogen, carbon, and water; and
controlling the valving to recycle at least a portion of the mixed product stream to the feedstock gas reactor.
